# EUROPEAN PATENT APPLICATION

(11) **EP 4 781 818 A1**
(43) Date of publication of application: **29.07.2026**
(21) Application number: 25226444.5
(22) Date of filing: 22.12.2025
(51) Int. Cl.: A01G 23/08, A01G 23/083, A01G 7/00

(54) **METHOD IN USING FOREST WORK MACHINE AND FOREST WORK MACHINE**

(30) Priority: 23.12.2024 FI 20246549
(71) Applicant: Ponsse Oyj, 74200 Vieremä (FI)
(72) Inventor: Savolainen, Markku, 74200 Vieremä (FI)
(74) Representative: Kolster Oy Ab

(57) **Abstract**

A method in using a forest work machine (1) and a forest work machine. The forest work machine comprises a boom (10) and, at the end of the boom, a wood processing device (20), which wood processing device comprises a cross-cutting device (26) for felling a tree (60, 70). The forest work machine further comprises a control system, which control system comprises at least one control unit (7) for controlling the operation of the forest work machine, the boom and the wood processing device and for storing data describing measures performed by the forest work machine to a database (40) connected to the control system. The control system identifies, based on the measures performed by the forest work machine, the making of at least one of the following: an artificial snag (62, 72) or fallen deadwood (64, 74), and stores to the database at least one of the following data: quantity or location of at least one of the following: made artificial snags or made pieces of fallen deadwood.

## Description

### Background of the invention

The invention relates to timber harvesting and particularly to a method in controlling a forest work machine and to a forest work machine.

Forest management activities performed in connection with timber felling include, in addition to planting new trees after felling, also measures for maintaining or promoting forest biodiversity performed during the timber felling. These measures for maintaining or promoting forest biodiversity aim at creating new nesting sites for birds and insects and new substrates for vegetation.

A measure performed in connection with timber felling for maintaining or promoting forest biodiversity is making artificial snags from trees being felled. Alternatively, an artificial snag can be called e.g. a high stump or a high biodiversity stump. Another measure performed in connection with timber felling for maintaining or promoting forest biodiversity is making fallen deadwood from trees being felled or sections thereof. An alternative term for fallen deadwood is e.g. downed deadwood.

The artificial snag is a high stump of a tree cut from the height of about 2-5 metres. Hence, the artificial snag is made by cutting a standing tree from the height of about 2-5 metres, whereby a 2-5-metre butt part remains standing from the felled tree, which part forms a standing artificial snag. In time, the artificial snag left standing decays and forms standing deadwood. The artificial snag decaying while standing provides nesting sites or a substrate for species utilizing decayed wood, such as e.g. tree cavity nesters, insects or fungi.

A section of the tree cut when making the artificial snag can be processed for economic use by removing its branches and/or bark and by possibly cutting said section of the tree trunk limbed and/or debarked into parts of predetermined length. Alternatively, the section of the tree cut from the artificial snag can be left on the ground to decay. In other words, the section of the tree cut from the artificial snag is not processed for economic use but it is left on the ground as the so-called fallen deadwood. Deadwood decaying on the ground offers nesting sites or a substrate for species utilizing decayed wood on the ground level. It is also possible to make fallen deadwood without making an artificial snag. In such as case, the tree is felled at a standard height from the ground level such that only a butt part of standard height remains standing on the ground, which butt part is typically called a tree stump.

In connection with timber felling, artificial snags or fallen deadwood can be made in both intermediate fellings and final fellings. At the moment, there are no laws or regulations for obligating the making of artificial snags or fallen deadwood but their making is based on recommendations. Due to this, the registration of artificial snags or fallen deadwood and their reporting is rather limited, based on manual recordkeeping and mostly serving various studies and/or accountability reporting.

However, it is very probable that, in the future, acquiring different environmental or forestry certifications or certificates related to timber to be sold will involve a specific minimum number of artificial snags and/or fallen deadwood in an area being felled and, possibly, a very accurate reporting of artificial snags and/or fallen deadwood made. Then, it is presumable that manual recordkeeping of artificial snags and/or fallen deadwood will not meet the requirements set in the certificates for reporting artificial snags and/or fallen deadwood.

### Brief description of the invention

The object of the invention is to introduce a novel type of a method for using a forest work machine and a novel type of a forest work machine.

The solution according to the invention is characterised by what is disclosed in the independent claims.

The invention is thus based on the control system of a forest work machine monitoring measures related to timber felling performed and identifying, based on the measures performed by the forest work machine, the making of an artificial snag and/or fallen deadwood. In this case, the artificial snag refers to a high stump of a tree cut from the height of about 2-5 metres. Therefore, the 2-5-metre butt part remaining standing from the cut tree forms a standing artificial snag. Fallen deadwood refers to a section of the tree cut from a standing tree that is left on the ground to decay. Fallen deadwood can be made in connection with making an artificial snag, whereby the section cut from the artificial snag, or some significant section suitable for economic use of it, is left on the ground to decay. Fallen deadwood can also be made by felling the whole tree from a standard height from the ground level such that only a standard height of a butt, that is a short stump, which typically is the height of less than 30 centimetres, remains standing. Then, the whole felled tree, or some section suitable for economic use of it, is left on the ground to decay.

In the solution presented in this specification, an artificial snag and fallen deadwood only refer to deadwood made by a forest work machine made in connection with timber felling. Typically, forests also include trees that have naturally died standing or fallen onto the ground. Therefore, felling areas can also include naturally created standing deadwood or fallen deadwood. Such naturally created deadwood are left untouched in connection with felling whenever possible. It is also possible to determine the location and/or quantity of naturally created deadwood and store it to a database but in a way different from the solution presented in this specification.

An advantage of the solution according to the invention is that data related to made artificial snags and/or made fallen deadwood in each working site of the forest work machine, such as a specific stand marked for cutting, can be recorded in more detail without manual recordkeeping. The recording of made artificial snags and/or fallen deadwood implemented by the control system of the forest work machine enables an accurate, versatile, detailed and reliable reporting related to artificial snags and/or fallen deadwood made at each working site, which also supports scientific study better than earlier.

Some embodiments of the invention are presented in the dependent claims.

### Brief description of the drawings

The invention will now be described in greater detail by means of preferred embodiments and with reference to the attached drawings, in which:
Figure 1 is a schematic diagonal top view of a forest work machine,
Figure 2 is a schematic diagonal top view of a wood processing device of a forest work machine,
Figure 3 is a schematic view of a working site of the forest work machine and artificial snags and fallen deadwood made at the working site,
Figure 4 is a schematic view of a control system of a forest work machine,
Figure 5 is a schematic view of a method in the use of the forest work machine,
Figure 6 is a schematic view of another method in the use of the forest work machine,
Figure 7 is a schematic view of some alternative embodiments of the control system of the forest work machine for determining a height position of a wood processing device of the forest work machine in relation to the ground level,
Figures 8, 9, 10, and 11 are schematic views of some embodiments of the control system of the forest work machine for determining a location of a made artificial snag and/or made fallen deadwood,
Figure 12 is a schematic view of an embodiment for determining the volume of wood material of a made artificial snag and/or made fallen deadwood, and
Figure 13 is a schematic view of a map base.

For reasons of clarity, some embodiments of the invention are illustrated in the figures in a simplified form. Similar parts are indicated in the figures by the same reference numbers.

### Detailed description of the invention

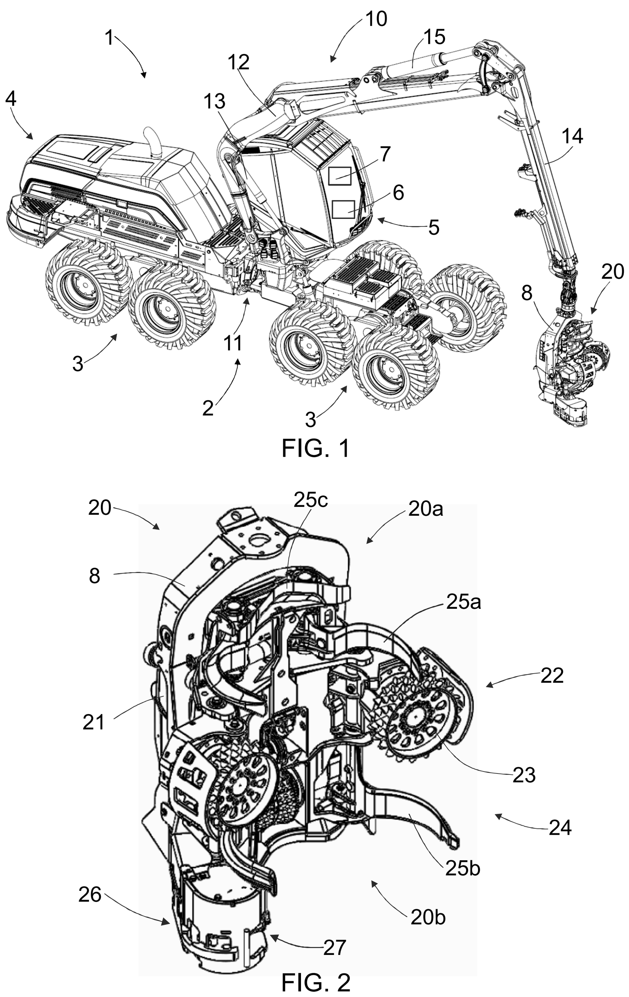

Figure 1 is a schematic diagonal top view of a harvester 1. The havester 1 is a forest work machine, in which, the presented solution can be applied. The harvester 1 comprises a chassis 2 which forms at least part of a frame structure of the harvester 1 and, into connection of which, are arranged moving means 3. Via the moving means 3, the harvester 1 can move in relation to its work surface or work environment. Said moving means 3 are wheels in Figure 1, but generally said moving means can comprise at least one of the following: wheels arranged on an axle, wheels arranged on a bogie, a track system or some other means known as such to provide the movement of the forest work machine and to possibly change the position and/or direction of the movement of the forest work machine in relation to its work surface or work environment.

The harvester 1 further comprises a power source 4. The power source 4 can comprise e.g. a combustion engine, one or more electric motors and sets of batteries, and/or a generator or different combinations of these for generating the required power for providing the movement of the harvester 1 and for operating the devices arranged in the harvester 1.

The harvester 1 additionally comprises a cab 5. The cab 5 may be arranged foldably and/or rotatably in relation to the chassis 2. The cab 5 comprises required control means 6, by means of which, the operator of the harvester 1 may control the drive of the harvester and the devices arranged to it. Said control means 6 are shown very schematically in Figure 1 and they may comprise e.g. one or more manually controllable control means, such as e.g. a control lever, and/or one or more foot-controllable control means, such as e.g. a pedal. Said control means 6 can also comprise a pre-designed harvester work plan in the form of a runnable programme which is runnable by e.g. one or more harvester control units 7 very schematically shown in Figure 1 for controlling the drive of the harvester and the devices arranged in it. Said control unit 7 can be e.g. a computer or some other device or means comprising a microprocessor or some other microcontroller that is obvious to those skilled in the art.

The harvester 1 further comprises a boom 10. The boom 10 can be supported e.g. on the chassis 2 or some other part of the frame of the harvester 1 or a part connected to it. The boom 10 can be arranged foldably and/or rotatably in relation to the chassis 2. The outmost end of the boom 10 forms the tip of the boom. The tip of the boom 10 includes a harvester head 20 forming the wood processing device of the harvester 1. The harvester head 20 is connected to the boom 10 via a shackle 8.

In the harvester 1 of Figure 1, the boom 10 comprises a base 11 connected to the chassis 2 of the harvester 1. The base 11 comprises a turntable, by means of which, the boom 10 can be rotated around the vertical axle. The turntable can comprise e.g. a lower ring and an upper ring bearing-mounted in relation to each other. The upper ring can be provided with a toothing, whereby the upper ring can be turned by a motor which rotates a toothed wheel for said toothing.

The boom 10 comprises a lifting boom 12. The lifting boom 12 is connected to the turntable of the base 11. Via the turntable, the lifting boom 12 and thus the whole boom 10 can be turned around the vertical axle. In the height direction of the harvester 1, the position of the lifting boom 12 can be changed by a lifting cylinder 13.

Furthermore, a luffing boom 14 is pivoted to the lifting boom 12. The luffing boom 14 is moved by a folding cylinder 15. The outmost end of the luffing boom 14 includes the above-mentioned harvester head 20. The luffing boom 14 can also include a telescopic extension, whereby said harvester head 20 is arranged to the outer end of said telescopic extension.

The harvester 1 of Figure 1 constitutes a moving forest machine equipped with a harvester head, which is intended for performing felling of trees and for performing processing of the felled tree. The processing of the felled tree typically comprises delimbing of the tree, that is, removing the branches of the felled tree. In addition to or instead of delimbing, the processing of the felled tree can comprise debarking the felled tree. Furthermore, the processing of the felled tree can comprise cross-cutting the delimbed and/or debarked tree trunk into parts of preferred lenght. Indeed, in connection with forest work machines, the term 'wood processing' typically refers to the working of the felled part of the tree, that is, delimbing, debarking and/or cross-cutting into parts. Furthermore, the term 'wood handling' used in connection with forest work machine is typically broader of its meaning, comprising the transfer of the felled tree or its parts without processing applied to the tree or its parts in addition to the processing of the tree.

Alternatively, the moving forest machine equipped with a harvester head can also be a combination of a forwarder and a harvester, whereby the forest machine in question also comprises a load space for taking a load, typically parts of the tree trunk cross-cut to size, to be transported by the forest machine. Furthermore, the moving forest work machine equipped with a harvester head could also be some other moving work machine suitable for felling trees and/or processing felled trees, such as e.g. a digger with a harvester head fixed to its boom.

Different from the example of Figures 1 and 2, the moving forest work machine equipped with a wood processing device can also be a forest work machine solely suitable for felling trees. In this case, the wood processing device of the forest work machine only comprises means suitable for supporting and cross-cutting the trunk of the tree to be felled but no means required for processing the felled tree, such as delimbing and possibly also debarking the felled tree. Wood processing devices which are only applicable for felling a tree and not being capable of removing branches and possibly also bark from an already felled tree, are also called felling heads of a forest work machine to separate them from harvester heads of a forest work machine also suitable for processing the felled tree.

The forest work machines of the above type are forest work machines operating typically based on the active control of the operator of the forest work machine. However, it is also possible to apply the here presented solution in both semi-autonomously operating forest work machines, whereby the forest work machine can operate without the active control of the operator at least for some period of time. Furthermore, the presented solution can also be applied in a substantially totally independently operating forest work machine. In the substantially totally independently operating forest work machine, the operator does not actively participate in the control of the operation of the forest work machine without a particular reason. The control means 6 used for the control of the forest work machine and other possible means intended to be operated by the operator of the forest work machine can also be located separate from the forest work machine, whereby the control of the forest work machine is implemented by remote control. If the control of the forest work machine is totally implementable by remote control, the forest work machine does not necessarily include the cab 5.

Figure 2 schematically shows a diagonal top view of a harvester head 20 which can be used e.g. in the harvester 1 of Figure 1 or in some other moving forest work machine for felling a tree and for processing the felled tree. Figures 1 and 2 show the harvester head 20 turned into a position where it is typically when felling a tree. The harvester head 20 comprises a frame structure 21 into connection with which the shackle 8 is arranged. Furthermore, into connection with the frame structure 21, means intended for the felling of the tree and the processing of the felled tree fitted to the harvester head 20 are arranged.

The means intended for felling a tree and processing the felled tree typically comprise a feeding device 22, a delimbing device 24 and a cross-cutting device 26.

The feeding device 22 is used for supporting the tree during felling and for feeding the tree in the harvester head 20 when processing the felled tree in the harvester head 20. In Figure 2, the feeding device 22 comprises turnableg feeding rolls 23 as feeding means which are pressed using one or more actuators against the trunk of the tree for both supporting the tree to be felled during the felling and for feeding the felled tree being processed by the harvester head 20 by using said feeding means in the harvester head 20.

The delimbing device 24 is used for supporting the tree during felling and for removing branches of the felled tree i.e. for delimbing the tree being fed by the feeding device 22 in the harvester head 20. In Figure 2, the delimbing device 24 comprises turnable delimbing knives 25a, 25b as delimbing means which are pressed using one or more actuators against the trunk of the tree for both supporting the tree to be felled during the felling and for delimbing the felled tree being processed by the harvester head 20 when the felled tree 20 is being fed by the feeding device 22 in the harvester head 20. The harvester head can also include fixed delimbing knives 25c, either as separate knives fastened to the body of the harvester head or as knives shaped to the body of the harvester head.

The cross-cutting device 26 is used for cross-cutting the tree being felled and for cross-cutting the tree being processed in the harvester head 20 into parts of preferred length. In the harvester head 20 of Figure 2, the cross-cutting device consists of a chain-saw type cross-cut saw 27. Only the housing of the cross-cut saw 27 is visible in Figure 2.

The structure of the harvester head of the forest work machine can also differ from the one presented above. Various harvester heads, devices utilized in them and their operation are known as such by those skilled in the art.

If the moving forest work machine is equipped with a felling head only suitable for timber felling instead of the harvester head 20, said felling head solely comprises a cross-cutting device and some means for the fastening of the felling head to the tree being cut for supporting the tree during felling.

A typical boom of the forest work machine can be described as having, as its successive parts, a ring base to be rigidly connected to the forest machine, a foot section of the boom rotatably pivoted to the ring base, a first boom pivoted to the foot section, a second boom pivoted to the first boom, and a possible telescopic arrangement in the second boom. Furthermore, the boom and the wood processing device fitted at its end comprise actuators, obvious to those skilled in the art, for using each successive boom part, that is, either for rotating via said pivoting or shortening or lengthening via a possible telescopic arrangement, or for using or rotating the wood processing device. However, the construction and paths of the boom can differ from said typical implementation. The forest work machine can also comprise more than only one boom.

Additionally, a typical boom of the forest work machine and a wood processing device fitted at its end comprise a set of sensors obvious to those skilled in the art, which comprises one or more sensors for determining the position and/or state of motion of the boom parts of the boom and for determining the position and/or state of motion of the wood processing device. The state of motion of the boom part or the wood processing device describes the motion speed, acceleration and/or angular velocity of the boom part or wood processing device in question. The position and/or state of motion of the boom parts and/or the wood processing device can be determined independently or in relation to a part of the boom or the forest machine frame. Said actuators can in turn be e.g. just above mentioned cylinders or other cylinders or various motors. Said sensors can be e.g. various position sensors, motion speed sensors, sensors measuring position, acceleration or angular velocity, pressure sensors, sensors sensing the direction of a magnetic field, or radars based on e.g. radio waves or optics, or cameras.

Modern forest work machines apply the tip control of the boom for providing a desired placement and possibly also desired position of the tip of the boom, i.e. the outer end of the boom and the wood processing device in it, for performing a work stage. On the other hand, the solution presented here can utilize the tip control for identifying the location of the boom tip and the wood processing device in it in relation to the forest work machine. Furthermore, the solution presented here can also be applied to such forest work machines where the tip control is not applied to the control of the boom.

In the tip control of the boom, a command is given to the tip of the boom by the control device of the forest machine, in other words, a request to move to a particular direction at a particular speed. Said control commands are converted by means of one or more control units included in the control system of the forest machine to at least one control measure of at least one actuator affecting the position of the boom and/or at least one control measure of at least one actuator affecting the position of the wood processing device. For each said actuator of the boom or the wood processing device is calculated by said one or more control units the required motion speed such that the combined effect of the various actuators affecting the position of the boom or the wood processing device provide the desired movement of the tip of the boom and, as its result, further the end position and, if required, the desired direction of the tip of the boom. That is, by controlling the boom parts of the boom and/or the wood processing device into a desired position, the desired position and direction of the tip of the boom is provided.

In the tip control, the control command directed at the tip of the boom by the control means for moving the tip of the boom is implemented by dividing said control command to the movement of the individual boom parts of the boom and/or the movement of the wood processing device for moving the tip of the boom in accordance with the control command using the positions and states of motion of the boom parts and/or the harvester head measured by the sensors within degrees of freedom allowed by the boom parts and the harvester head and their actuators. On the other hand, based on the positions and states of motion of the boom parts of the boom and/or the wood processing device measured by said sensors, it is possible to determine the location of the tip of the boom and/or the wood processing device in relation to the forest work machine when the tip of the boom and/or the wood processing device is controlled to said location in relation to the forest work machine.

The desired motion of the tip of the boom can be divided to different boom parts and/or the wood processing device utilizing e.g. the Jacobian matrix. For implementing the tip control, guidance can be found in the following literature references, for example: Björn Löfgren: Kinematic Control of Redundant Knuckle Booms, Licentiate thesis, Department of Machine Design, Royal Institute of Technology, Stockholm, 2004; Björn Löfgren: Kinematic Control of Redundant Knuckle Booms with Automatic Path-Following Functions, Doctoral thesis, Department of Machine Design, Royal Institute of Technology, Stockholm, 2009; Mikkel M. Pedersen, Michael R. Hansen, Morten Ballebye: Developing a Tool Point Control Scheme for a Hydraulic Crane Using Interactive Real-time Dynamic Simulation: Modelling, Identification and Control, Vol. 31 No. 4, 2,010 pp. 133-143, ISSN 1890-1328.

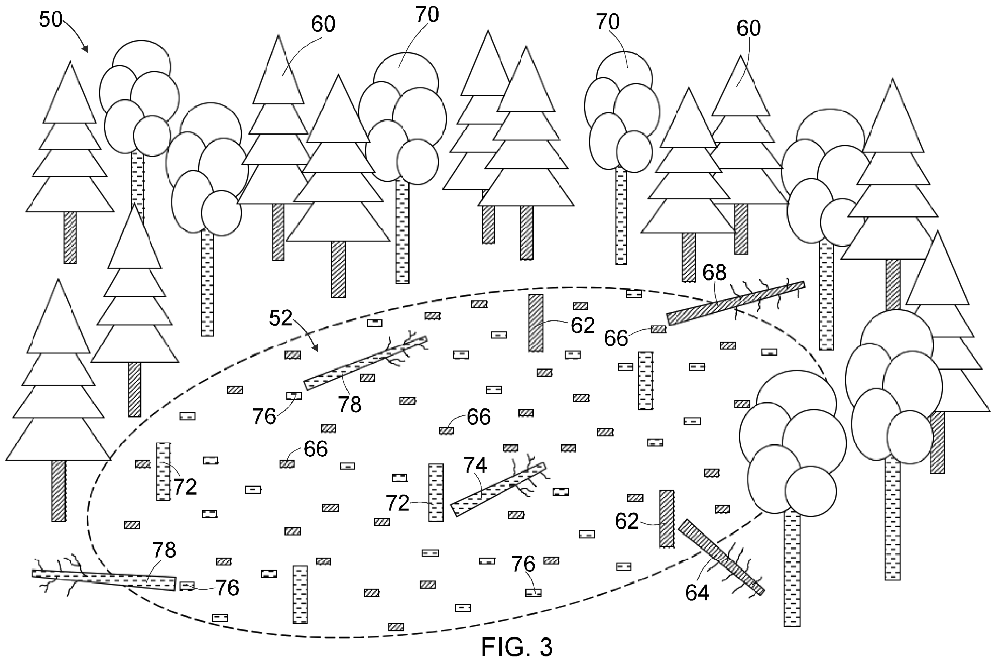

Figure 3 is a schematic view of a working site 50 of the forest work machine. The working site 50 is e.g. a stand of trees which comprises for example spruces 60 and birches 70. Figure 3 further shows schematically a felling area 52 limited with a dashed line. In the felling area 52, there are further schematically shown artificial snags and fallen deadwood of the spruces 60 and the birches 70 made during the felling. That is, the artificial snag refers to a high stump of a tree cut at the height of about 2-5 metres, and the fallen deadwood refers to a section cut of a standing tree which has been left on the ground to decay.

Furthermore, Figure 3 schematically shows by designation 62 artificial snags made of the spruce 60. The fallen deadwood made in connection with making the artificial snag 62 made of the spruce 60 is designated by 64. Designation 66 shows stumps which have been created by felling the spruce 60 from a standard height, typically less than 30 centimetres, from the ground level such that only a short stump 66 remains standing on the ground. Designation 68 shows fallen deadwood which has been made by felling the spruce 60 such that only a short stump 66 remains standing on the ground.

Furthermore, Figure 3 schematically shows by designation 72 artificial snags made of the birch 70. The fallen deadwood made in connection with making the artificial snag 72 made of the birch 70 is designated by 74. Designation 76 shows stumps which have been created by felling the birch 70 from a standard height such that only a short stump 76 remains standing on the ground. Designation 78 shows pieces of fallen deadwood which has been made by felling the birch 70 such that only a short stump 76 remains standing on the ground.

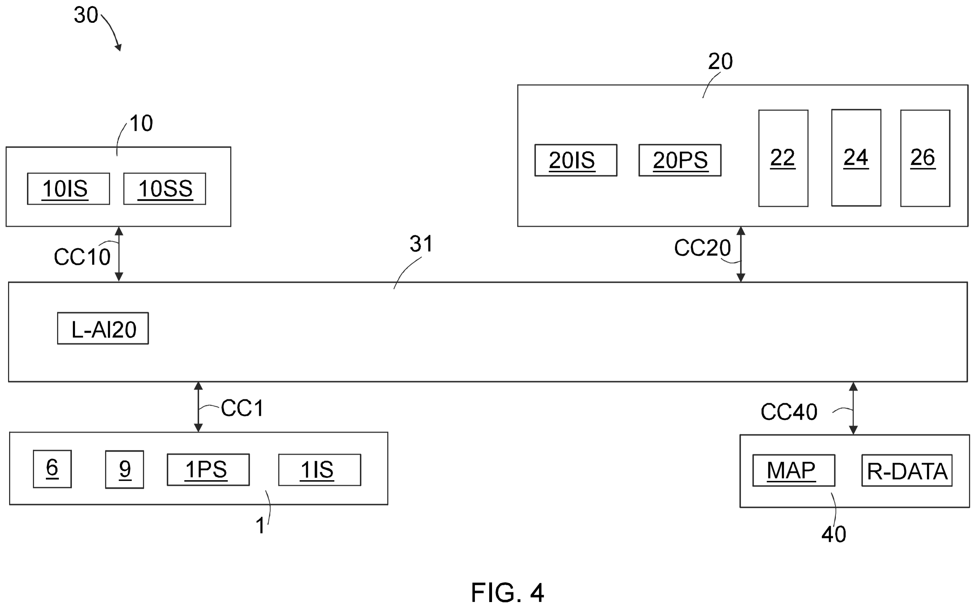

Figure 4 schematically shows a control system 30 for controlling the operation of a forest work machine. The example of the control system 30 of the forest work machine of Figure 4 particularly relates to the type of a harvester 1 of Figure 1 and the type of a harvester head 20 of Figure 2. The control system 30 is also naturally configurable for use in connection with other types of forest work machines and wood processing devices.

The control system 30 of Figure 4 comprises a control unit 31. The control unit 31, of which there can be more than one, can be the same as the control unit 7 of the harvester 1 mentioned above. Alternatively, the control unit 31 can be implemented as a part of the control unit 7 of the harvester 1 or it can be a control unit 31 physically separate from the control unit 7 of the harvester 1 but functionally configured to work together with the control unit 7 of the harvester 1. The control unit 31 comprises or is related to a required quantity of memory for storing the program run by the control unit 31 and data used in connection with the program and/or the produced data at least temporarily. The control unit 31 can be e.g. a computer or some other device or means comprising a microprocessor or some other microcontroller that is obvious to those skilled in the art.

The control unit 31 is connected to the harvester 1 by means of a data transfer connection CC1. The data transfer connection CC1 can be two-directional, whereby the control unit 31 can be configured to both send data to devices or means affecting the operation of the harvester 1 and to receive data from possible devices or means describing the operation of the harvester 1. Data send to the devices or means affecting the operation of the harvester 1 are typically control data produced by control measures implemented by the control means 6 of the harvester 1 for controlling the operation of the harvester 1. Data received from the devices or means describing the operation of the harvester 1 are typically data describing the operation or operation status of the harvester 1.

The control unit 31 is connected to the boom 10 by means of a data transfer connection CC10. The data transfer connection CC10 can be two-directional, whereby the control unit 31 can be configured to both send data to devices or means affecting the operation of the boom 10 and to receive data from possible devices or means describing the operation of the boom 10. Data send to the devices or means affecting the operation of the boom 10 are typically control data produced by control measures implemented by the control means 6 of the harvester 1 for controlling the operation of the boom 10. Data received from the devices or means describing the operation of the boom 10 are typically data describing the operation or operation status of the boom 10.

The control unit 31 is connected to the harvester head 20 by means of a data transfer connection CC20. The data transfer connection CC20 can be two-directional, whereby the control unit 31 can be configured to both send data to devices or means affecting the operation of the harvester head 20 and to receive data from possible devices or means describing the operation of the harvester head 20. Data send to the devices or means affecting the operation of the harvester head 20 are typically control data produced based on control measures implemented by the control means 6 of the harvester 1 for controlling the operation of the harvester head 20 and feeding device 22 in it, the delimbing device 24 and/or cross-cutting device 26. Data received from the devices or means describing the operation of the harvester head 20 are typically data describing the operation or operation status of the harvester head 20 and the feeding device 22 in it, the delimbing device 24 and/or cross-cutting device 26.

Figure 4 shows further schematically a database 40. The database 40 is stored to a memory unit which can be either a memory unit arranged to the forest work machine or a memory unit arranged outside the forest work machine, e.g. to a remote control centre or a cloud service.

The database 40 is connected to the control unit 31 of the control system 30 by means of a data transfer connection CC40. The data transfer connection CC40 can be two-directional, whereby the control unit 31 can be configured both to store data describing the measures performed by the forest work machine to the database 40 and to receive data stored to the database 40.

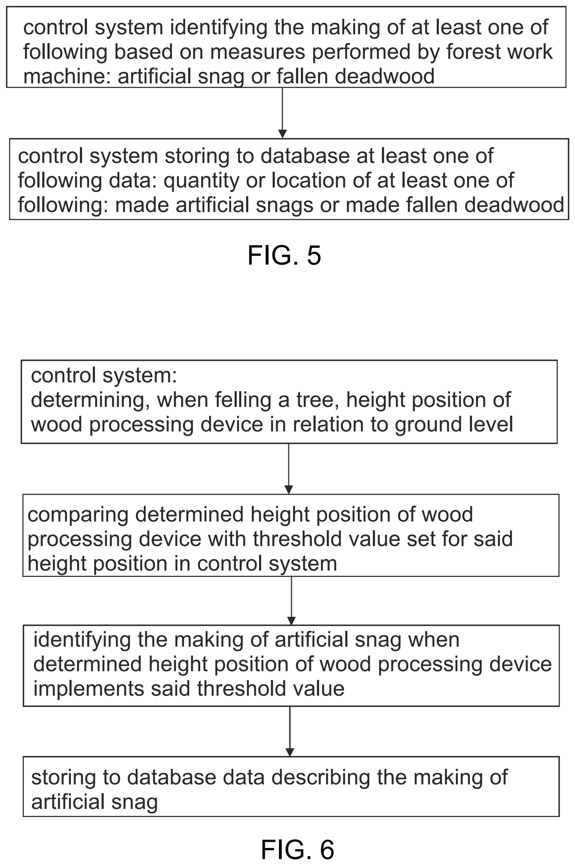

The control unit 31 of the control system 30 is configured to identify, based on data describing the measures performed by the forest work machine, the making of at least one of the following: an artificial snag or fallen deadwood. The control unit 31 is further configured to store to the database at least one of the following data: quantity or location of at least one of the following: made artificial snags or made pieces of fallen deadwood. According to the method schematically shown in Figure 5, the control system 30 identifies, based on the measures performed by the forest work machine, the making of at least one of the following: an artificial snag or fallen deadwood, and stores to the database at least one of the following data: quantity or location of at least one of the following: made artificial snags or made pieces of fallen deadwood.

When the control system of the forest work machine during the use of the forest work machine identifies the making of an artificial snag and stores to the database the quantity and/or location of the made artificial snags, it is possible to accurately record the data related to made artificial snags in each work environment, i.e. working site, such as e.g. a specific stand marked for felling, of the forest work machine during the use of the forest work machine. Equivalently, when the control system of the forest work machine during the use of the forest work machine identifies the making of fallen deadwood and stores to the database the quantity and/or location of made pieces of fallen deadwood, it is possible to accurately record the data describing the made fallen deadwood in each working site of the forest work machine during the use of the forest work machine. The recording of made artificial snags and/or fallen deadwood implemented by the control system of the forest work machine during the use of the forest work machine enables a versatile, detailed and accurate reporting related to artificial snags and/or fallen deadwood made at each working site.

According to an embodiment, the control system 30 of the forest work machine comprises means for determining the height position of the wood processing device. In this embodiment, the control system 30 of the forest work machine is configured to determine, when felling a tree, the height position of the wood processing device in relation to the ground level, to compare the determined height position of the wood processing device with a threshold value settable to said height position in the control system, to identify the making of an artificial snag when the determined height position of the wood processing device implements the threshold value, and to store to the database the data describing the making of the artificial snag. In accordance with the method implemented by this embodiment, which is also schematically shown in Figure 6, the control system determines, when felling the tree, the height position of the wood processing device in relation to the ground level, compares the determined height position of the wood processing device with the threshold value settable for said height position in the control system, identifies the making of the artificial snag when the determined height position of the wood processing device implements the threshold value, and stores to the database the data describing the making of the artificial snag.

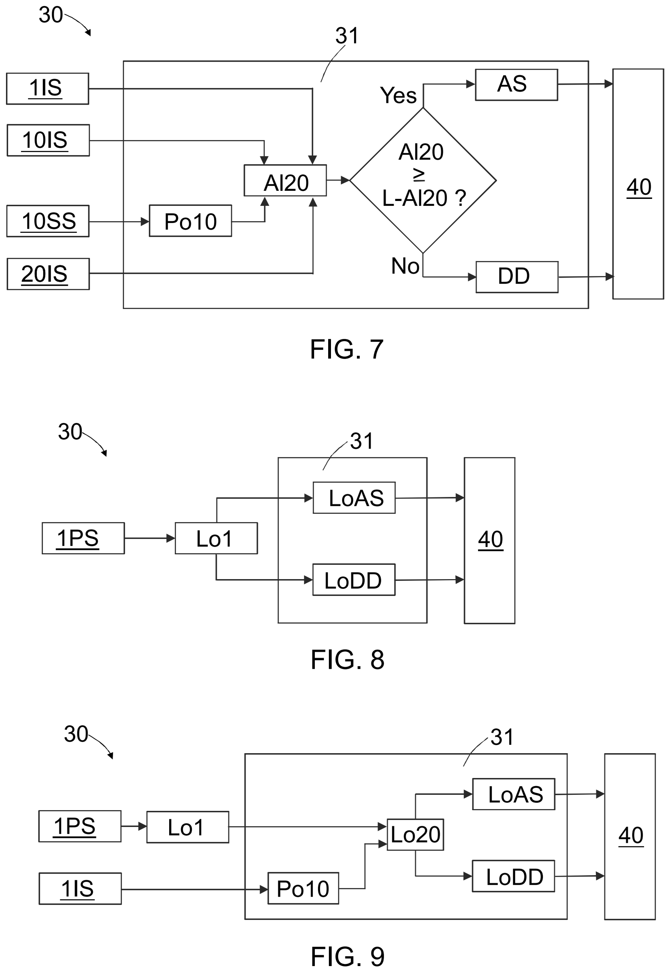

Figure 7, together with Figure 4, schematically show the control system 30 and a control unit 31 which is configured to determine the height position of the wood processing device in relation to the ground level and to identify the making of the artificial snag based on the height position of the wood processing device used in connection with the cross-cutting of the tree. The height position of the wood processing device in relation to the ground level is schematically designated by Al20 and the threshold value set to the height position of the wood processing device is designated by L-Al20. Said threshold value can describe e.g. the minimum distance of the wood processing device from the ground level for tree felling, after it has been implemented, the control system 30 is configured to identify the making of the artificial snag from the tree being felled.

Said threshold value L-Al20 can be set to the control system 30, e.g. to the control unit 31 of the control system 30, e.g. by a data input device 9 intended for entering data located to the forest work machine. Said threshold value L-Al20 and said data input device 9 are schematically shown in Figure 4. Said data input device 9 can comprise e.g. a display unit and a data input unit connected to it directly or indirectly. Alternatively, said data input device 9 can comprise a display unit equipped with a touch screen.

Figure 7 is a schematic view of some alternative embodiments of the control system of the forest work machine for determining a height position of a wood processing device of the forest work machine in relation to the ground level, when felling the tree. In Figure 7, and further in Figures 8-13, the artificial snag is designated by AS and the fallen deadwood by designation DD.

According to an embodiment of the control system 30 of Figure 7, the control system 30 comprises an imaging system 1IS arranged to the harvester 1, which is configured to image the position of the harvester head 20 upwards from the ground level. The imaging system 1IS can comprise e.g. at least one camera, laser scanner or radar. Based on the data produced by the imaging system 1IS, the control unit 31 of the control system 30 is configured to determine the height position Al20 of the harvester head 20 in relation to the ground level.

According to a second embodiment of the control system 30 of Figure 7, the control system 30 comprises an imaging system 10IS arranged to the boom 10, which is configured to image the position of the harvester head 20 upwards from the ground level. The imaging system 10IS can comprise e.g. at least one camera, laser scanner or radar. Based on the data produced by the imaging system 10IS, the control unit 31 of the control system 30 is configured to determine the height position Al20 of the harvester head 20 in relation to the ground level.

According to a third embodiment of the control system 30 of Figure 7, the control system 30 comprises a sensoring system 10SS arranged to the boom 10, which is configured to produce data on the position Po10 of the boom 10. Said sensors can be e.g. various position sensors, motion speed sensors, sensors measuring position, acceleration or angular velocity, pressure sensors, sensors sensing the direction of a magnetic field, or radars based on e.g. radio waves or optics, or cameras. At least in this embodiment, the control system 30 is thus configured to control the boom 10 by tip control. The control of the boom 10 by tip control is still also possible in the other embodiments of Figure 7. Based on the data produced by the sensoring system 10SS, the control unit 31 of the control system 30 is configured to determine the position Po10 of the boom 10 in relation to the harvester 1. The position Po10 of the boom 10 indicates the position of the tip of the boom 10 in relation to the harvester 1. Because the position of the tip of the boom 10 in relation to the harvester 1 indicates the position of the harvester head 20 in relation to the harvester 1, the control unit 31 can determine, based on the position of the tip of the boom 10, the height position Al20 of the harvester head 20 in relation to the ground level.

According to a fourth embodiment of the control system 30 of Figure 7, the control system 30 comprises an imaging system 20IS arranged to the harvester head 20, which is configured to image the position of the harvester head 20 upwards from the ground level. The imaging system 20IS can comprise e.g. at least one camera, laser scanner or radar. Based on the data produced by the imaging system 20IS, the control unit 31 of the control system 30 is configured to determine the height position Al20 of the harvester head 20 in relation to the ground level.

There is no need for the height position of the wood processing device to describe the accurate distance of the wood processing device from the ground level. Instead in this solution, sufficient data on the height position of the wood processing device to identify the making of the artificial snag from a tree being felled are such that, when cross-cutting the tree, the control system can decipher the wood processing device being at a considerably greater distance, typically at the distance of 2-5 metres, upwards from the ground level than in conventional tree felling, where only a very short stub, typically the height of less than 30 centimetres, is left on the ground. This means the felling of the tree typically about 5-10 centimetres above the topmost root collar. Therefore, the making of the artificial snag from the tree being felled can be distinguished with accurate precision irrespective of possible ground surface variations within the reach of the boom 10.

When the height position Al20 of the harvester head 20 in relation to the ground level is determined, the control unit 31 of the control system 30 is configured to compare the determined height position Al20 of the harvester head 20 with the threshold value L-Al20 set for the height position. As, when felling the tree, the determined height position AI20 of the harvester head 20 implements said threshold value L-AI20, that is, the distance of the harvester head 20 fastened to the tree for felling the tree from the ground level equals at least said threshold value L-AI20, the control unit 31 is configured to identify the making of the artificial snag AS from the tree being felled and to store the data describing the making of the artificial snag to the database 40.

According to an embodiment, the control system is configured to store, when felling the tree, to the database the data describing the making of fallen deadwood for the part of the felled tree. In this embodiment, the control system stores to the database, when felling the tree, the data describing the making of fallen deadwood. If the felling of the tree is followed by the processing of the felled tree part, such as shown in more detail below, the data describing the making of the fallen deadwood is deleted from the database.

The data on the making of the artificial snag or the making of the fallen deadwood can comprise only data on that an artificial snag or a piece of fallen deadwood is made. The data on the making of the artificial snag or the making of the fallen deadwood can comprise data on the location of the made artificial snag or made fallen deadwood at the working site of the forest work machine. Said location of the artificial snag or fallen deadwood can be stored e.g. as coordinates in the local set of coordinates of the area where the working site of the forest work machine is located, if a regional set of coordinates is available. Alternatively, it is possible to define a working site specific set of coordinates in relation to a reference point. The most common solution for describing the location of an artificial snag or fallen deadwood is to use the location data produced by a GPS-based positioning system.

According to an embodiment, the control system comprises means for determining the location of the forest work machine in the working site of the forest work machine and the control system is configured to determine, when felling the tree, the location of the forest work machine in its working site and to store the determined location of the forest work machine for the location of at least one of the following: location of artificial snag or location of fallen deadwood.

Figure 8, together with Figure 4, schematically show an embodiment of the control system 30 to determine a location Lo1 of the harvester 1 in its working site and to store the determined location of the harvester 1 to the database 40 as the location LoAS of the artificial snag and/or the location LoDD of the fallen deadwood DD. In this embodiment, the control unit 31 of the control system 30 sets to the database 40 as the location LoAS of the artificial snag AS and/or the location LoDD of the fallen deadwood the location Lo1 of the harvester 1 determined in the working site of the harvester 1.

In the embodiment of Figures 4 and 8, the control system 30 comprises a positioning system 1PS in the harvester 1. The positioning system 1PS can comprise e.g. one locator utilizing a satellite positioning system, such as e.g. a GPS system, which locator is configured to receive a required number of time and navigation signals sent by satellites belonging to the satellite positioning system in order to determine the position Lo1 of the harvester 1. In addition to or instead of the locator utilizing the satellite positioning system, the positioning system 1PS can comprise e.g. a locator based on camera, Lidar or some other technology which can determine based on imaging a work environment of the harvester 1 the position of the harvester 1 in its working site in relation to one or more reference point selected from the working site. Alternatively, said locator based on imaging the environment can specify the position information of the harvester 1 acquired by means of the satellite positioning system based on the determined position of the harvester 1 in relation to one or more reference points.

In the embodiment of Figures 4 and 8, the positioning system 1PS is located in the harvester 1. Alternatively, said positioning system can comprise one or more locators which are located in the working site of the forest work machine physically separate from the forest work machine but connected to the control unit 31 of the control system 30 via a data transfer connection.

According to an embodiment, the wood processing device comprises, in addition to the cross-cutting device, a feeding device and a delimbing device for processing a part of a felled tree in the wood processing device, and the control system in configured to determine the next work step of the wood processing device following the tree felling and, when the next work step of the wood processing device following the tree felling being tree felling, the control system is configured to identify the leaving of the part of the felled tree on the ground as fallen deadwood. According to this embodiment, the control system deciphers the leaving of the part of the felled tree on the ground as fallen deadwood if the next work step of the wood processing device after the tree felling is the felling of the next tree such that the already felled tree will not be processed.

According to an embodiment, the next work step of the wood processing device following the tree felling being the processing of the part of the felled tree, the control system is configured to identify the omitting of the making of fallen deadwood. According to this embodiment, the control system does not decipher the part of the felled tree as fallen deadwood to be left on the ground if the wood processing device starts the processing of the part of the felled tree to be done immediately after the tree felling. If, as a result of the felling of the tree, the control system already recorded data in the database on the making of fallen deadwood, the control system is configured to delete said data related to the making of fallen deadwood from the database.

For example, in the case of the harvester head 20, the work step of the harvester head 20 can be determined in the control unit 31 of the control system 30 based on the produced control data for controlling the operation of the harvester head 20 or the feeding device 22, the delimbing device 24 and/or cross-cutting device 26 in the harvester head 20, or based on data describing the operation of the harvester head 20 or the feeding device 20, the delimbing device 24 and/or cross-cutting device 26 in the harvester head 20. Therefore, e.g. when the harvester head 20 is in a substantially vertical position while the cross-cutting device 26 is being used, the control system 30 can identify that the work step of the harvester head 20 is tree felling. Alternatively, when the harvester head 20 is in a position substantially different from the vertical position while the feeding device 22 or the cross-cutting device 26 is being used, the control system 30 can identify that the work step of the harvester head 20 is processing of the felled tree. Generally, it is obvious to those skilled in the art that, based on data obtained from sensors located to the harvester head and the devices included in it, it is possible to identify different steps of wood processing.

According to an embodiment, instead of data describing the operation of the harvester head, the forest work machine can be equipped with a camera system or some other computer vision system, based on the data produced by which, it is possible to identify fallen deadwood left on the ground and/or an artificial snag after the felling of a tree.

The part of the felled tree can also be processed only partially. Before tree felling or during processing of the part of the felled tree, it is possible that some sections of the tree not suitable for utilization are observed, which sections can be left on the ground as fallen deadwood. Such tree sections not suitable for utilization can be e.g. very curved tree sections, fractures in the tree or otherwise damaged sections from the viewpoint of quality. If said tree sections unsuitable for utilization form a considerable part of the felled tree, it is possible to record to the database data on made fallen deadwood.

According to an embodiment, the control system comprises means for determining the location of the wood processing device in the working site of the forest work machine and the control system is configured to determine, when felling the tree, the location of the wood processing device in the working site of the forest work machine and to store the determined location of the wood processing device for the location of an artificial snag. According to this embodiment, when a tree is felled for making an artificial snag, the accurate location of the made artificial snag in the working site of the forest work machine can be stored to the database.

According to an embodiment, the control system is configured to compare, when felling a tree, the determined location of the wood processing device to the locations of made artificial snags stored to the database and, when the set threshold value of the determined height position of the wood processing device is not implemented, the control system is configured to identify the omitting of the making of the artificial snag when the determined location of the wood processing device corresponds to the location of the stored artificial snag, and to delete the data related to the making of the artificial snag from the database. According to this embodiment, the data on the making of the artificial snag and its location identified from felling a tree occurring at a higher height than standard felling height and already recorded to the database can be deleted from the database if the wood processing device returns to the same location for felling a tree at a standard height from the ground level. Such a situation can occur e.g. when one or more branches of a branched tree is cut before felling the part of the tree still standing, or the tree cannot be totally felled at one go e.g. due to obstacles around it.

According to an embodiment, the control system comprises means for determining the location of the wood processing device in the working site of the forest work machine and the control system is configured to determine the location of the wood processing device when leaving a part of the felled tree on the ground as fallen deadwood and to store the determined location of the wood processing device for the location of fallen deadwood. According to this embodiment, when a tree is felled for making fallen deadwood, the accurate location of made fallen deadwood in the working site of the forest work machine can be stored to the database.

According to an embodiment, the control system is configured to determine, when starting the processing of a part of the felled tree, the location of the wood processing device, to compare the determined location of the wood processing device to the location of fallen deadwood stored to the database, to identify the omitting of the making of fallen deadwood, when the determined location of the wood processing device equals to location of fallen deadwood stored to the database, and to delete the data related to the making of fallen deadwood from the database. According to this embodiment, the data on the making and location of fallen deadwood identified as a result of felling a tree and already stored to the database can be deleted from the database if the wood processing device return for processing the part of the felled tree to such a location where the part of the felled tree was left. Such a situation can occur e.g. when several trees are felled before starting the processing of the trees. Alternatively, such a situation can occur e.g. when two forest work machines are used in the working site, the first of which forest work machine is only used for felling a tree and the second forest work machine is used for processing the part of the felled tree.

Figures 9, 10 and 11 together with Figure 4 schematically show some alternative embodiments of the control system of a forest work machine to determine the location of the wood processing device of the forest work machine in the working site of the forest work machine.

In the embodiment of Figure 9, the control system 30 comprises a positioning system 1PS in the harvester 1 for determining a location Lo1 of the harvester 1 in its working site. The positioning system 1PS can be the same one presented above in connection with Figure 8. The control system 30 further comprises an imaging system 1IS in the harvester 1 to image a position Po10 of the boom 10 in relation to the harvester 1. The imaging system 1IS can be the same one presented above which is configured to image the location of the harvester head 20 upwards from the ground level. Based on data produced by the imaging system 1IS, the control unit 31 of the control system 30 is configured to determine the position Po10 of the boom 10 in relation to the harvester 1. Based on the location Lo1 of the harvester 1 and the position Po10 of the boom 10 in relation to the harvester 1, the control unit 31 of the control system 30 is further configured to determine the location Lo20 of the harvester head 20 in the working site of the harvester 1. When a tree is felled for making an artificial snag AS, the simultaneously determined location Lo20 of the harvester head 20 in the working site of the harvester 1 describes the location of the made artificial snag AS in the working site of the harvester 1. When a part of the felled tree is left on the ground for making fallen deadwood DD, the simultaneously determined location Lo20 of the harvester head 20 in the working site of the harvester 1 describes the location of the made fallen deadwood DD in the working site of the harvester 1.

Instead in the harvester 1, the devices implementing the positioning system 1PS and/or the imaging system 1IS can be located in the working site of the forest work machine physically separate from the forest work machine but connected to the control unit 31 of the control system 30 by a data transfer connection.

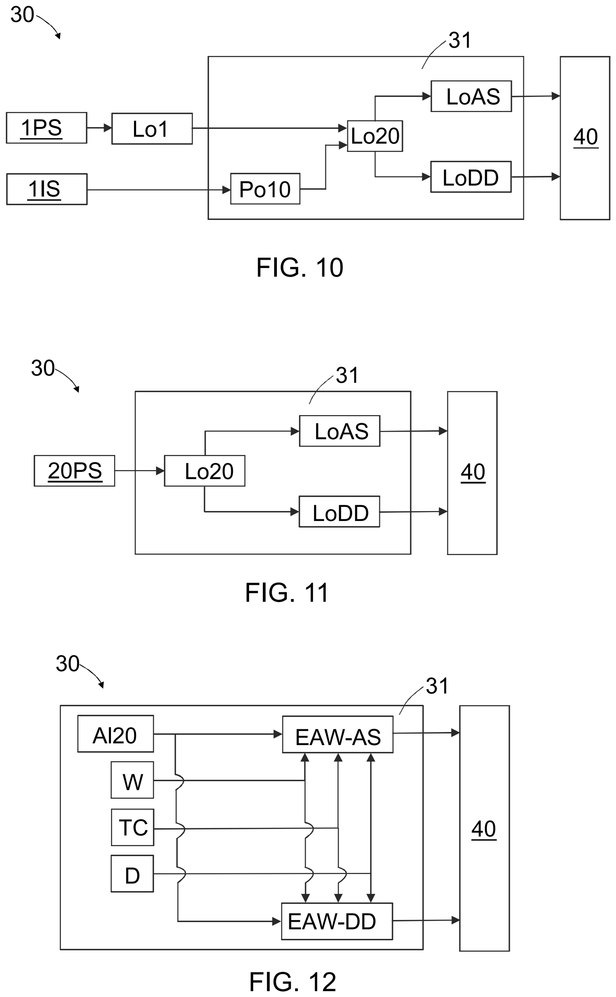

In the embodiment of Figure 10, the control system 30 comprises a positioning system 1PS in the harvester 1 for determining a location Lo1 of the harvester 1 in its working site. The control system 30 further comprises a sensoring system 10SS fitted to the boom 10, which is configured to produce data on the position Po10 of the boom 10, like described above. At least in this embodiment, the control system 30 is thus configured to control the boom 10 by tip control. The control of the boom 10 by tip control is still also possible in the embodiments of Figures 9 and 11. Based on the data produced by the sensoring system 10SS, the control unit 31 of the control system 30 is configured to determine the position Po10 of the boom 10 in relation to the harvester 1. Based on the location Lo1 of the harvester 1 and the position Po10 of the boom 10 in relation to the harvester 1, the control unit 31 of the control system 30 is further configured to determine the location Lo20 of the harvester head 20 in the working site of the harvester 1.

In the embodiment of Figure 11, with reference also to Figure 4, the control system 30 comprises at the harvester head 20 a positioning system 20PS for determining a location Lo20 of the harvester head 20 in the working site of the harvester 1. The positioning system 20PS of the harvester head 20 can be implemented similarly as the positioning system 1PS of the harvester 1, which was described above in connection with Figure 8.

According to an embodiment, the database 40 comprises a map base MAP describing the working site of the forest work machine, and at least one of the following data are stored to the map base MAP: location LoAS of artificial snag or location LoDD of fallen deadwood. The map base MAP, which is schematically shown in Figure 4, can comprise e.g. significant contours and/or parts of terrain generally significant in terms of locating, such as rocky terrains or erratic boulders, in the working site of the forest work machine. Data on the locations LoAs of made artificial snags AS and/or locations LoDD of made fallen deadwood DD stored to the map base MAP produces a visually easily reviable summary of artificial snags and/or fallen deadwood made in the working site of the forest work machine for maintaining or promoting biodiversity.

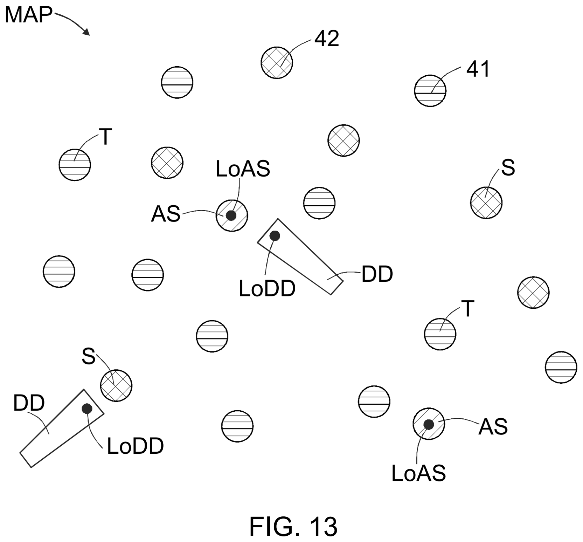

Figure 13 schematically shows an embodiment as an example of the map base MAP and data stored to it. In Figure 13, the artificial snags AS made in the working site are schematically shown by hatched circles. The determined locations of the artificial snags AS are shown by designation LoAS. The fallen deadwood DD made in the working site are schematically shown by a trapezium. The determined locations of the fallen deadwood DD are shown by designation LoDD. The determined location of the fallen deadwood DD can describe the location of the butt part of the fallen deadwood DD, the wood processing device of the forest work machine being typically fastened to said butt part when leaving the felled tree part on the ground as fallen deadwood DD.

The map base MAP can also show a short stump remaining on the ground as a result of the felling of a tree without making an artificial snag. In Figure 13, said short stumps are schematically shown by cross-hatched circles and designation S. The location of the short stumps S can also be stored to the database and shown on the map base. The map base MAP can also show trees left standing. In Figure 13, said trees left standing are schematically shown by horizontally hatched circles and designation T. Trees T left standing can be located to the map base based on e.g. data produced by an imaging system 1IS, 10IS in the harvester 1 or the boom 10. It is also possible to store the location of some trees T left standing to the database and to show them on the map base if the location in question is determinable accurately enough for the efficiency of timber harvesting performed by the forest work machine will not decease.

When felling a tree, it is possible to determine the species of the tree being felled and the diameter of the cross-cutting point. Additionally, at least one of the following data can be determined: tree taper curve, height of cross-cutting point or length of fallen deadwood. Said data can be determined in the control unit 31 or assisted by the control unit 31. Said data can further be stored to the database 40.

A species W of the tree being felled can be determined by imaging the tree. The imaging can be performed e.g. by the above-mentioned imaging system 1IS in the harvester 1 or imaging system 10IS in the boom 10. Based on the data produced by said imaging, the control unit 31 can determine the species W of the tree being felled by an image recognition program.

The species W of the tree being felled can be determined by the operator of the forest work machine by setting the data determined by the species W to the control system 30 by a data input device 9.

The species W of the tree being felled can also be determined by setting to the control system a default tree species to the working site in question, the trees of which species are primarily felled in the working site. It is also possible to determine the species W of the tree being felled as a default the same as the tree species of the previous felling. In both of these cases, if the species of the tree being felled differs from the default tree species, e.g. the operator of the forest work machine can set the correct tree species to the control system 30.

A diameter D of the cross-cutting point of the tree can be determined e.g. based on data describing the turnable feeding means of the feeding device 22 or the turnable delimbing means of the delimbing device 24 when said feeding means and/or delimbing means are pressed against the tree trunk for supporting the tree when felling it. The diameter D of the cross-cutting point of the tree can also be determined based on data describing the position or the change in position of one or more cross-cutting means of the cross-cutting device, where said data describing the position or the change in position describes the change of place or position of the cross-cutting device occurring between the start of the cross-cutting and the end of the cross-cutting of the tree. The diameter D of the cross-cutting point of the tree can also be determined by time used for the cross-cutting. Modern forest work machines and wood processing devices comprise sensoring which produces data, base on which, the diameter D of the cross-cutting point of the tree can be determined e.g. in a way described above.

A taper curve TC of the tree being felled can be determined by imaging the tree. The imaging can be performed e.g. by the above-mentioned imaging system 1IS in the harvester 1 or imaging system 10IS in the boom 10. Based on the data produced by said imaging, the control unit 31 can determine the taper curve TC of the tree being felled by an image recognition program.

Generally, the tree taper curve refers to representing the shape of the tree by graphical smoothing based tapering series or mathematical expressions. The taper curve is mainly dependent on the tree species and location data. In practice, the tree taper curve describes the diameter of the tree on different heights and comprises species- and region-specific statistical data on the dimensions and characteristics of the species based on long-term field studies.

Therefore, the taper curve TC of the tree can also be determined e.g. by determining the diameter D of the cross-cutting point of the tree and the distance of the cross-cutting point from the ground level and by matching the data e.g. to region- and species-specific taper curves stored to the database 40 related to the working site in question. As the work proceeds, it is also possible to form stand-specific taper curves by measuring the taper curves of trees being processed by the harvester head and by forming a stand-specific taper curve database from the measuring results using statistical methods.

The height of the cross-cutting point from the ground level can be determined when cross-cutting the tree based on data describing the height position AI20 of the wood processing device.

The length of the fallen deadwood being left on the ground can be determined by imaging the tree being felled. The imaging can be performed e.g. by the above-mentioned imaging system 1IS in the harvester 1 or imaging system 10IS in the boom 10. Based on said data produced by imaging, the control unit 31 can determine the length of the tree being felled by means of an image recognition program and subtract the length of the butt part remaining on the ground from the length of the tree being felled. This produces the length of the part of the tree to be felled which equals the length of fallen deadwood to be left on the ground. If a part of the tree being felled will be processed, the length of the fallen deadwood remaining on the ground is the length of the felled tree part minus the length of the part to be processed.

The length of the fallen deadwood remaining on the ground can also be determined by imaging the fallen deadwood left on the ground and by determining the length of the fallen deadwood by an image recognition program.

The length of the fallen deadwood remaining on the ground can additionally be determined by estimating based on the tree taper curve TC and the diameter and height position of the cross-cutting point.

Figure 12 schematically shows some possible embodiments for estimating the wood material volume of the made artificial snag and/or made fallen deadwood in the control system 30. An estimate EAW-AS for the wood material volume of the artificial snag and/or an estimate EAW-DD for the wood material volume of the fallen deadwood can be further stored to the database 40.

According to an embodiment, the estimate EAW-AS for the wood material volume of the artificial snag can be determined based on data describing the tree species W, the diameter D of the tree cross-cutting point and the heigh position AI20 of the tree cross-cutting point. This embodiment produces a rough estimate EAW-AS for the wood material volume of the artificial snag by assuming that the artificial snag is of the shape of a straight cone. Particularly for short artificial snags, the estimate of wood material volume calculated in this way is sufficiently reliable for most uses.

According to an embodiment shown in Figure 12, the estimate EAW-AS for the wood material volume of the artificial snag can be determined based on the tree species W, the diameter D of the tree cross-cutting point, the heigh position AI20 of the tree cross-cutting point, and the tree taper curve TC. This embodiment produces a reliable estimate EAW-AS for the wood material volume of both short and long artificial snags.

According to an embodiment shown in Figure 12, the estimate EAW-DD for the wood material volume of the fallen deadwood can be determined based on the tree species W, the diameter D of the tree cross-cutting point, the heigh position AI20 of the tree cross-cutting point, and the tree taper curve TC.

According to an embodiment, reporting data R-DATA is automatically produced from at least one of the following: artificial snags made in the working site of the forest work machine or fallen deadwood made in the working site of the forest work machine. The report data R-DATA can comprise e.g. data on the quantity of artificial snags and/or pieces of fallen deadwood made in the working site. The report data R-DATA can comprise e.g. data on the location of artificial snags and/or pieces of fallen deadwood made in the working site. The report data R-DATA can comprise data e.g. on the height of made artificial snags and/or length of made fallen deadwood as well as the tree species and cross-cutting point diameter of made artificial snags and/or fallen deadwood. The report data R-DATA can comprise data e.g. on the estimated wood material volume of made artificial snags and/or fallen deadwood. The report data R-DATA can further comprise data produced based on the above data, such as e.g. number of made artificial snags and/or pieces of fallen deadwood and/or their cubic volume per unit area, average height/volume of the artificial snag, average length/volume of the fallen deadwood, range of variation, standard deviation. Said data can also be classified by tree species.

The report data R-DATA can be produced in the control unit 31 of the control system 30 and stored to the database 40. The report data R-DATA can also be produced in such a data processing device external to the forest work machine, which is connected to the database 40. The report data R-DATA can be produced after the work in the working site is completed. The report data can additionally be produced in real-time during the use of the forest work machine. The production of real-time report data enables the real-time monitoring of made artificial snags and/or fallen deadwood and their comparison with target values possibly set for made artificial snags and/or fallen deadwood.

Therefore, according to an embodiment, the report data R-DATA can be produced automatically and in real-time. In other words, data which describes the actual outcome of the making of artificial snags and/or fallen deadwood, which can describe one or more of the above data, can be updated substantially continuously as the felling proceeds. It is also possible to display in real-time or otherwise share said report data R-DATA to parties entitled to the data in question, who can be e.g. the operator of the forest work machine, the contractor, the owner of the felling site, the orderer of the felling work, or the further processor of felled trees. In the forest work machine, said data can be produced for the operator of the forest work machine e.g. to a display unit 9 connected to the control system 30 of the forest work machine.

According to an embodiment, the control system is configured to compare in real-time the data describing the outcome of the artificial snags and/or fallen deadwood made in the working site of the forest work machine with a target value set to the control system corresponding to the data in question, and the control system is configured to produce data based on said comparison to the operator of the forest work machine for assisting the operator of the forest work machine in the making of artificial snags and/or fallen deadwood to reach said target value.

According to such an embodiment, it is possible to set e.g. a target per hectare for made artificial snags and/or fallen deadwood to the control system. Said target can be e.g. pieces per hectare or wood material volume per hectare. The control system compares the data describing the outcome of made artificial snags and/or fallen deadwood in the working site of the forest work machine with the target value set to the control system corresponding the data in question. The control system can e.g. produce the operator of the forest work machine, in addition to or instead of the data describing the outcome, the share of the outcome of the target, the quantity lacking from the target or some other information in which the outcome is compared with the target. In this way, the control system produces, based on said comparison, data to the operator of the forest work machine for assisting the operator of the forest work machine in the making of the artificial snags and/or fallen deadwood in order to reach the target value in question. The control system can also guide, even considering the location of artificial snags and/or fallen deadwood previously made in the working site, the operator of the forest work machine to make artificial snags and/or fallen deadwood at suitable points of the working site to reach said target.

Those skilled in the art will find it obvious that, as technology advances, the basic idea of the invention can be implemented in many different ways. The invention and its embodiments are thus not restricted to the examples described above but may vary within the scope of the claims.

## Claims

1. A method in using a forest work machine, which forest work machine comprises
a boom and, at the end of the boom, a wood processing device, which wood processing device comprises a cross-cutting device for felling a tree, and
which forest work machine further comprises a control system, which control system comprises at least one control unit for controlling the operation of the forest work machine, the boom and the wood processing device and for storing data describing measures performed by the forest work machine to a database connected to the control system,
**characterized by**
the control system identifying based on the measures performed by the forest work machine the making of at least one of the following: an artificial snag or fallen deadwood, and
the control system storing to the database at least one of the following data: quantity or location of at least one of the following: made artificial snags or made pieces of fallen deadwood.

2. A method according to claim 1, **characterized by**
the control system of the forest work machine comprising means for determining the height position of the wood processing device, and by the control system
determining, when felling a tree, the height position of the wood processing device in relation to the ground level,
comparing the determined height position of the wood processing device with a threshold value set for said height position in the control system,
identifying the making of an artificial snag when the determined height position of the wood processing device implements the threshold value, and
storing to the database the data describing the making of the artificial snag.

3. A method according to claim 1 or 2, **characterized by**
the control system storing to the database the data describing the making of fallen deadwood for the part of a part of the felled tree.

4. A method according to any one of preceding claims, **characterized by** the control system of the forest work machine comprising means for determining the location of the forest work machine in the working site of the forest work machine, and by the control system
determining, when felling a tree, the location of the forest work machine in its working site, and
storing the determined location of the forest work machine to the database as the location of at least one of the following: location of artificial snag or location of fallen deadwood.

5. A method according to any one of preceding claims, **character-ized** by the wood processing device further comprising a feeding device and a delimbing device for processing a part of the felled tree in the wood processing device, and by the control system
determining the next work step of the wood processing device following the felling, and
the next step of the wood processing device following the felling being tree felling, identifying the leaving of the part of the felled tree on the ground as fallen deadwood.

6. A method according to claim 5, **characterized by**, when the next step of the wood processing device following the felling being the processing of the felled tree, the control system identifies the omitting of the making of fallen deadwood.

7. A method according to any one of preceding claims, **character- ized** by the control system of the forest work machine comprising means for determining the location of the wood processing device in the working site of the forest work machine, and by the control system
determining, when felling a tree, the location of the wood processing device in its working site,
storing the determined location of the wood processing device to the database as the location of the artificial snag.

8. A method according to any one of preceding claims, **character** - **ized** by the control system of the forest work machine comprising means for determining the location of the wood processing device in the working site of the forest work machine, and by the control system
determining the location of the wood processing device when leaving a part of the felled tree on the ground as fallen deadwood and
storing the determined location of the wood processing device to the database as the location of the fallen deadwood.

9. A method according to claim 7 or 8, **characterized by** the control system
comparing, when felling a tree, the determined location of the wood processing device with the locations of artificial snags stored in the database, and by
when the determined threshold value of the height position of the wood processing device is not implemented, identifying the omitting of the making of an artificial snag, when the determined location of the wood processing device equals the location of the artificial snag stored to the database, and
deleting the data related to the making of the artificial snag from the database.

10. A method according to claim 5 and 8, **characterized by** the control system
determining, when starting the processing of the part of the felled tree, the location of the wood processing device,
comparing the determined location of the wood processing device with locations of fallen deadwood stored to the database,
identifying the omitting of the making of fallen deadwood when the determined location of the wood processing device equals a location of fallen deadwood stored to the database, and
deleting the data related to the making of the fallen deadwood from the database.

11. A method according to any one of the preceding claims, **charac** - **terized** by
the database comprising a map base depicting the working site of the forest work machine, and by
the control system storing to the map base at least one of the following data: location of artificial snag or location of fallen deadwood.

12. A method according to any one of the preceding claims, **characterized by**
determining, when felling a tree, at least the species of the tree being felled and the diameter of the cross-cutting point. and
determining, based in said data, an estimate for at least one of the following data: wood material volume of artificial snag or wood material volume of fallen deadwood.

13. A method according to any one of the preceding claims, **characterized by** automatically producing report data from at least one of the following: artificial snags made in the working site of the forest work machine or fallen deadwood made in the working site of the forest work machine.

14. A forest work machine, which comprises
a boom and, at the end of the boom, a wood processing device, which comprises a cross-cutting device for felling a tree, and
a control system which comprises at least one control unit for controlling the operation of the forest work machine, the boom and the wood processing device and for storing data describing measures performed by the forest work machine to a database connected to the control system,
**characterized in that**
the control system is configured to
identify, based on the measures performed by the forest work machine, the making of at least one of the following: an artificial snag or fallen deadwood, and
store to the database at least one of the following data: quantity or location of at least one of the following: made artificial snags or made pieces of fallen deadwood.

15. A forest work machine according to claim 14, **characterized in that** the control system of the forest work machine comprises means for determining the height position of the wood processing device, and that the control system of the forest work machine is configured to
determine, when felling a tree, a height position of wood processing device in relation to the ground level,
compare the determined height position of the wood processing device with a threshold value set for said height position in the control system,
identify the making of an artificial snag, when the determined height position of the wood processing device implements the condition set by a threshold value or the making of fallen deadwood, when the determined height position of the wood processing device does not implement the threshold value, and
store to the database data describing the making of the artificial snag or the fallen deadwood.
